# FASCICULE DE BREVET EUROPEEN

(11) **EP 2 097 960 B1**
(45) Date de publication et mention de la délivrance du brevet: **01.03.2017**
(21) Numéro de dépôt: 07858442.2
(22) Date de dépôt: 15.10.2007
(51) Int. Cl.: H02G 3/14

(54) **SUPPORT D'APPAREILLAGE ELECTRIQUE**
TRÄGER FÜR EIN ELEKTRISCHES GERÄT
ELECTRIC EQUIPMENT CARRIER

(30) Priorité: 30.10.2006 FR 0609506
(43) Date de publication de la demande: 09.09.2009
(73) Titulaire: Legrand France, 87000 Limoges (FR); Legrand SNC, 87000 Limoges (FR)
(72) Inventeur: CHAUMENY, Jean-Luc, 87110 Solignac (FR); PETIT, Laurent, 87260 Saint Paul (FR)
(74) Mandataire: Orsini, Fabienne
(86) Numéro de dépôt international: PCT/FR2007/001680
(87) Numéro de publication internationale: WO 2008/059122

(56) Documents cités:
- EP-A- 1 675 236
- US-A- 5 580 204
- US-A- 5 907 126

## Description

### DOMAINE TECHNIQUE AUQUEL SE RAPPORTE L'INVENTION

La présente invention concerne de manière générale les supports mis en oeuvre pour rapporter un quelconque mécanisme d'appareillage, tel que par exemple un mécanisme d'interrupteur ou de prise de courant, dans une boîte à encastrer dans une paroi quelconque ou dans un boîtier à rapporter en saillie d'une telle paroi.

Elle concerne plus particulièrement un support d'appareillage électrique se présentant sous la forme d'un cadre comprenant une âme plate en matière métallique revêtue d'un revêtement en matière synthétique isolante et des moyens de clippage d'une plaque de façade enjoliveur.

L'invention trouve une application particulièrement avantageuse dans la réalisation d'un appareillage électrique répondant aux critères d'isolation de la norme internationale IP20.

### ARRIERE-PLAN TECHNOLOGIQUE

Pour répondre aux critères d'isolation de la norme internationale IP20, un appareillage électrique doit être conçu de telle manière qu'en façade, aucun élément ou partie métallique ne soit accessible à un utilisateur.

En outre, la norme British Standard impose de raccorder à la terre toutes les parties métalliques d'un appareillage électrique.

Ainsi, les appareillages électriques qui répondent aux normes IP20 et British Standard intègrent actuellement des supports d'appareillage réalisés exclusivement en matière plastique isolante.

Ces supports ont une épaisseur relativement importante pour présenter la tenue mécanique recherchée.

Il existe également des appareillages électriques dont les supports d'appareillage sont des supports mixtes comprenant un cadre métallique sur lequel est rapportée par encliquetage une partie plastique qui intègre de nouvelles fonctions.

De tels supports sont complexes à réaliser et présentent, comme les supports tout en matière plastique, une épaisseur importante.

On connaît du document EP 1 675 236 appartenant aux demanderesses, un support d'appareillage comprenant un cadre plat en matière métallique surmoulé d'une peau en matière plastique isolante.

Un tel support d'appareillage de faible épaisseur allie la rigidité grâce à son cadre métallique et la sécurité électrique grâce à sa peau isolante.

Le cadre métallique intègre d'une seule pièce des moyens de clippage d'une plaque de façade enjoliveur. Ces moyens de clippage, qui viennent de formation avec le cadre métallique, sont en partie recouverts par la peau isolante.

Toutefois, des parties métalliques d'un tel support d'appareillage restent encore accessibles à l'utilisateur notamment au niveau desdits moyens de clippage.

Ainsi, pour le marché des appareillages électriques soumis à la norme British Standard, l'utilisation de ce support d'appareillage nécessite le raccordement de celui-ci à la terre.

Le document US 5 907 126 divulgue un appareillage électrique dans lequel il est prévu des clips métalliques pour la fixation d'un mécanisme d'appareillage sur le socle de l'appareillage. Ces clips sont des pinces pincées sur le socle autour d'ouvertures circulaires de celui-ci.

Enfin, le document US 5 580 204 divulgue un système de clippage mâle-femelle pour solidariser deux pièces quelconques l'une avec l'autre. Toutefois ici le système de clippage est relativement encombrant et n'est donc pas adapté au montage d'une plaque de façade enjoliveur sur le cadre d'un support d'appareillage électrique.

### OBJET DE L'INVENTION

Par rapport à l'état de la technique précité, la présente invention propose un nouveau support d'appareillage qui, pour des questions d'esthétiques de l'appareillage électrique dans lequel il est intégré, présente une faible épaisseur, qui présente une grande rigidité et confère à l'utilisateur un sentiment de sécurité électrique en laissant apparaître aucune partie métallique.

Plus particulièrement, l'invention propose un support d'appareillage tel que défini dans la revendication 1.

Avantageusement, le support d'appareillage conforme à l'invention répond aux exigences de la norme IP20 et n'a pas besoin d'être raccordé à la terre dans le cas où il serait utilisé sur un marché soumis à la norme British Standard.

D'autres caractéristiques avantageuses et non limitatives du support selon l'invention sont définies dans les revendications 2 à 11.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un support d'appareillage selon l'invention;
- la figure 2 est une vue schématique de face du support d'appareillage de la figure 1;
- la figure 3 est une vue en coupe selon le plan A-A de la figure 2;
- la figure 4 est une vue schématique arrière du support d'appareillage de la figure 1,
- la figure 5 est une vue schématique du détail Il de la figure 2 ; et
- la figure 6 est une vue schématique du détail I de la figure 1.

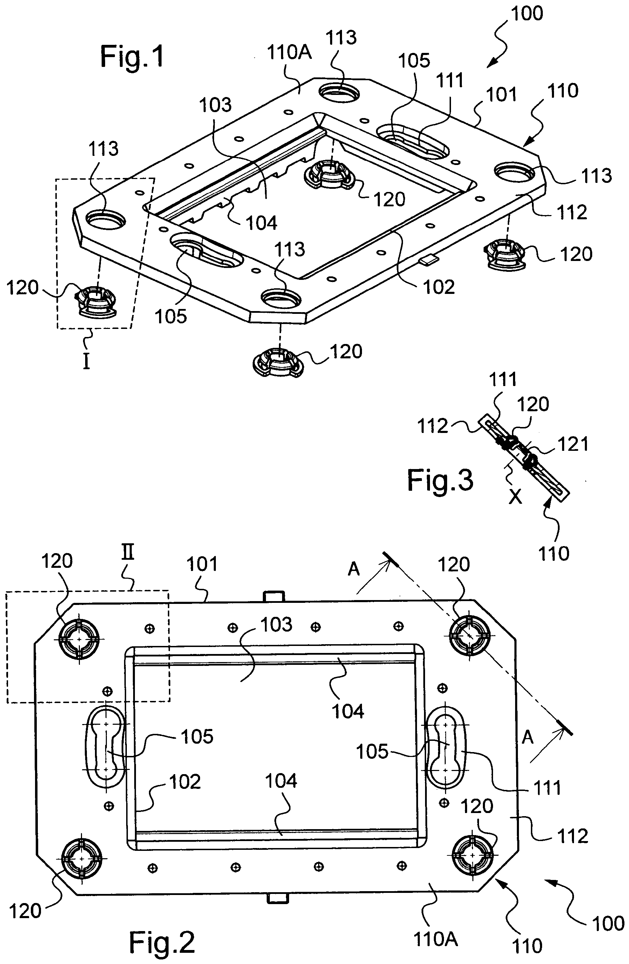

Sur les figures 1, 2 et 4, on a représenté un support 100 d'appareillage électrique destiné à être fixé sur une boîte (non représentée) tel qu'une boîte à encastrer dans une paroi quelconque, par exemple, une paroi alvéolaire ou sur un boîtier à rapporter en saillie sur une telle paroi.

Le support 100 sert au montage à l'intérieur de la boîte ou du boîtier d'un ou plusieurs mécanismes d'appareillage, tels qu'un mécanisme d'interrupteur, de prise de courant, de prise de téléphone, de disjoncteur.

Le support 100 se présente sous la forme d'un cadre 110 plat ici de forme rectangulaire.

Le cadre 110 est défini entre un bord périphérique extérieur 101 et un bord périphérique intérieur 102 qui délimite une ouverture centrale 103 également de forme rectangulaire.

L'ouverture centrale 103 du cadre 110 est destinée à accueillir un ou plusieurs socles de mécanisme d'appareillage (non représentés).

Pour le montage des socles de mécanisme d'appareillage, l'ouverture centrale 103 du cadre 110 est bordée sur ses quatre côtés de moyens de montage, ici des moyens d'encliquetage, qui comprennent, sur les deux côtés longitudinaux opposés de l'ouverture centrale 103, une nervure d'accrochage 104 formant un bord tombant à partir de la face avant 110A du cadre 110.

Sur cette nervure d'accrochage 104 sont destinées à s'accrocher des dents d'encliquetage prévues en saillie de deux faces opposées des socles de mécanisme d'appareillage.

Avantageusement, le cadre 110 comporte une âme 111 en matière métallique (en acier par exemple) revêtue d'un revêtement 112 en matière synthétique isolante.

L'âme 111 en matière métallique est rigide, elle forme alors l'ossature du cadre 110.

Lesdites nervures d'accrochage 104 comprennent également une ossature métallique qui est formée par découpage et pliage de l'âme 111 métallique.

Le revêtement en matière synthétique isolante peut être un élément rigide rapporté sur l'âme métallique du cadre.

Selon l'exemple préférentiel représenté sur les figures, ce revêtement est une peau 112 en matière synthétique isolante, surmoulée sur l'âme 111 en matière métallique du cadre 110.

Avantageusement, cette peau 112 obtenue par surmoulage présente une très faible épaisseur de quelques millimètres seulement.

Elle permet de conférer une isolation électrique au cadre 110 sans l'épaissir.

La peau 112 en matière synthétique isolante recouvre la majeure partie des faces avant et arrière de l'âme 111 en matière métallique du cadre 110. Elle recouvre également les tranches extérieure et intérieure de l'âme 111 ainsi que l'ossature des nervures d'accrochage 104.

L'association de l'âme 111 plate en matière métallique et de la peau 112 surmoulée sur cette âme 111 permet d'obtenir un support 100 isolant conforme à la norme IP20, esthétique de faible épaisseur et de grande résistance mécanique. L'épaisseur du support 100 est de l'ordre de 3 millimètres.

Selon un mode de réalisation préférentiel du support 100, la matière isolante constituant la peau 112 est du polypropylène ou un polymère chargé en fibres de verre ou encore un ABS (Acrylonitrile Butadiène Styrène).

Comme on peut le voir sur la figure 1, le support 100 comporte dans chacune des quatre branches de son cadre 110, des moyens d'assujettissement propres à permettre sa fixation à la boîte ou au boîtier.

Ces moyens d'assujettissement comprennent un perçage 105, en forme de trou de serrure, qui s'étend globalement circulairement, en étant centré sur le centre de l'ouverture centrale 103 du cadre 110. Chaque perçage 105 permet le passage du corps fileté d'une vis de fixation destiné à être vissé dans la boîte ou le boîtier non représenté.

On remarque, que la peau 112 forme autour de chaque perçage 105 une surépaisseur et, qu'à cet endroit, l'âme 111 en matière métallique est apparente.

Ainsi, pour que l'appareillage électrique intégrant le support 100 soit conforme à la norme d'isolation électrique IP20, il est alors prévu de rapporter à l'endroit desdits perçages 105 des caches (non représentés) en matière synthétique isolante.

Par ailleurs, comme le montrent les figures 1 à 6, il est prévu dans chacune des quatre branches du cadre 110 du support 100, de part et d'autre de chaque perçage 105, des moyens de clippage 120 d'une plaque de façade enjoliveur non représentée.

Avantageusement, lesdits moyens de clippage comprennent des plots 120 en matière synthétique isolante, distincts du cadre 110 et rapportés dans des ouvertures traversantes 113 de ce dernier.

Chaque plot 120 est réalisé d'une seule pièce par moulage d'une matière plastique par exemple en polycarbonate.

Chaque plot 120 est ici adapté à s'encliqueter dans l'ouverture correspondante du cadre 110.

Les ouvertures traversantes 113 du cadre 110 étant circulaires, chaque plot 120 présente un corps en forme de manchon à section circulaire dont le diamètre externe est légèrement inférieur au diamètre de l'ouverture traversante 113 du cadre 110 de manière que ledit corps puisse être introduit au travers de ladite ouverture traversante 113 (voir figure 3).

Le corps de chaque plot 120 définit intérieurement un conduit de passage 121 d'axe X, de section réduite par rapport à celle de l'ouverture traversante 113 du cadre 110 (voir figure 3).

Le corps de chaque plot 120 porte, d'une part, à une de ses deux extrémités au moins une dent 122 d'accrochage sur la face avant 110A du cadre 110, et, d'autre part, à son autre extrémité au moins une ailette 124 d'appui sur la face arrière 110B du cadre 110 (voir figures 3, 4, 5 et 6).

Selon l'exemple représenté, chaque plot 120 comporte en tête, une pluralité de dents 122 d'accrochage sur la face avant 110A du cadre 110. En outre, il comporte à sa base, deux ailettes 124 portées par la face externe de son corps.

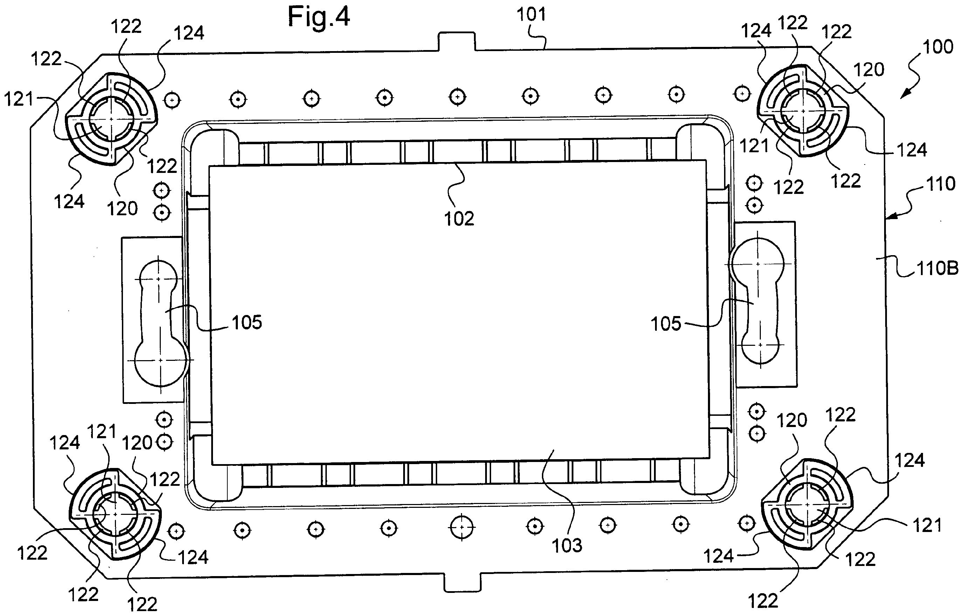

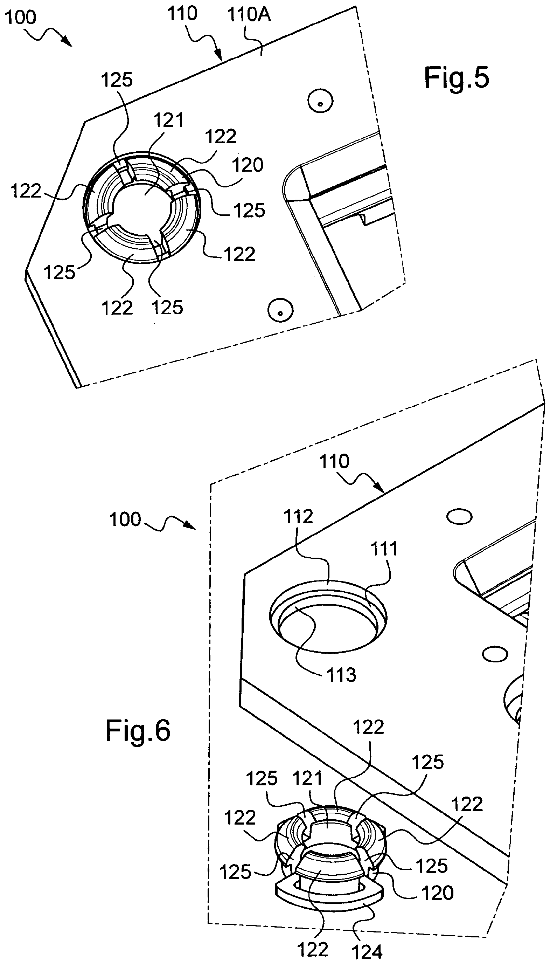

Chaque ailette 124 s'étend dans un plan perpendiculaire à l'axe X du corps du plot 120 et forme ici un secteur angulaire d'environ 90 degrés autour dudit corps (voir figures 4 et 6).

Bien entendu selon une variante de l'invention non représentée, on peut prévoir que les ailettes entourent complètement le corps de chaque plot.

En outre, comme le montrent les figures 5 et 6, chaque plot 120 est fendu longitudinalement d'une pluralité de fentes 125 parallèles qui séparent lesdites dents 122 les unes des autres.

De cette manière, les dents 122 sont prévues à l'extrémité de pattes (qui sont des parties du corps en forme de manchon) présentant une certaine souplesse pour permettre l'encliquetage aisé des dents 122 sur la face avant 110A du cadre 110 du support 100.

Lorsque chaque plot 120 est engagé dans l'ouverture traversante 113 du cadre 110, son corps forme un conduit de passage 121 isolant pour des éléments de fixation mâles de la plaque de façade enjoliveur (non représentée).

Les dents 122 du plot 120 accrochées sur la face avant 110A du cadre 110 forment des saillies adaptées à coopérer avec des moyens d'engagement complémentaires de la plaque de façade enjoliveur pour participer à la fixation de cette dernière sur le cadre 110 (voir figure 5).

Les ailettes 124 du plot 120 s'appuient contre la face arrière 110B du cadre 110 pour stabiliser le plot 120 dans l'ouverture traversante 113 correspondante du cadre 110.

En effet, les ailettes 124 et les dents 122 constituent des éléments de coincement qui exercent des appuis axiaux opposés sur le cadre 110 pour maintenir le plot 120 dans ladite ouverture traversante 113.

Chaque plot 120 en matière synthétique isolante permet avantageusement d'isoler électriquement le support 100 au niveau de ses points d'attache de la plaque de façade enjoliveur.

Grâce aux plots 120, l'utilisateur n'a donc pas accès à l'âme 111 métallique du support 100 tout en garantissant une fixation performante entre la plaque de façade enjoliveur et ledit support 100.

Un tel support 100 répond aux exigences de la norme d'isolation IP20 et s'affranchit du raccordement à la terre demandé par la norme British Standard.

Pour réaliser le support 100, on confectionne d'abord de manière classique (par emboutissage, pliage et découpage) l'âme 111 métallique puis on introduit l'âme 111 dans un moule et on ferme le moule de sorte que l'âme 111 est tenue dans celui-ci autour des perçages 105 puis on injecte dans le moule la matière synthétique constituant la peau 112 de sorte que celle-ci recouvre la totalité des éléments de l'âme 111 métallique à l'exception des parties pincées par le moule qui se situent autour des perçages 105.

Les plots 120 peuvent être rapportés sur le cadre 110 avant ou après le surmoulage de la peau 112 sur l'âme 111 métallique.

Avantageusement, lorsqu'ils sont rapportés après surmoulage de la peau 112, du fait de léger jeu qui existe entre leur corps et la paroi des ouvertures traversantes 113 du cadre 110, ils permettent de rattraper les éventuels écarts de positionnement ou d'alignement entre la plaque de façade enjoliveur et le support.

## Revendications

1. Ensemble constitué d'un support (100) d'appareillage électrique se présentant sous la forme d'un cadre (110) comprenant une âme (111) plate en matière métallique revêtue d'un revêtement (112) en matière synthétique isolante et de moyens de clippage (120) d'une plaque de façade enjoliveur, **caractérisé en ce que** lesdits moyens de clippage comprennent des plots (120) en matière synthétique isolante, distincts du cadre (110) et rapportés dans des ouvertures traversantes (113) de ce dernier, **en ce que** chaque plot (120) comporte un corps en forme de manchon portant, d'une part, à une de ses deux extrémités au moins une dent (122) d'accrochage sur la face avant (110A) du cadre (110), et, d'autre part, à son autre extrémité au moins une ailette (124) d'appui sur la face arrière (110B) du cadre (110), et **en ce que** chaque dent (122) de chaque plot (120) engagé dans l'ouverture traversante (113) du cadre (110) forme une saillie sur la face avant (110A) du cadre (110) adaptée à coopérer avec des moyens d'engagement complémentaires de la plaque de façade enjoliveur pour participer à la fixation de cette dernière sur le cadre (110).

2. Ensemble selon la revendication 1, **caractérisé en ce que** chaque plot (120) comporte à l'extrémité correspondante de son corps, une pluralité de dents (122) d'accrochage sur la face avant (110A) du cadre (110).

3. Ensemble selon la revendication 2, **caractérisé en ce que** chaque plot (120) est fendu longitudinalement d'une pluralité de fentes (125) qui séparent lesdites dents (122) les unes des autres.

4. Ensemble selon l'une des revendications précédentes, **caractérisé en ce que** chaque plot (120) est réalisé d'une seule pièce par moulage d'une matière plastique.

5. Ensemble selon l'une des revendications précédentes, **caractérisé en ce que** le revêtement (112) est une peau en matière isolante surmoulée sur l'âme (111) métallique.

6. Ensemble selon la revendication précédente, **caractérisé en ce que** les plots (120) sont rapportés sur le cadre (110) après le surmoulage de la peau (112) sur l'âme (111) métallique.

7. Ensemble selon la revendication 5, **caractérisé en ce que** les plots (120) sont rapportés sur l'âme (111) métallique du cadre (110) avant surmoulage de la peau (112) en matière isolante.

8. Ensemble selon l'une des revendications 5 à 7, **caractérisé en ce que** la peau (112) en matière isolante recouvre la majeure partie des faces avant et arrière de l'âme (111) métallique.

9. Ensemble selon l'une des revendications 5 à 8, **caractérisé en ce que** la peau (112) en matière isolante recouvre les tranches extérieure et intérieure de l'âme (111) métallique du cadre (110).

10. Ensemble selon l'une des revendications 5 à 9, **caractérisé en ce que** la matière isolante constituant la peau (112) est une matière plastique tel qu'un polymère chargé en fibres de verre ou un ABS (Acrylonitrile Butadiène Styrène).

11. Ensemble selon l'une des revendications 5 à 9, **caractérisé en ce que** la matière isolante constituant la peau (112) est du polypropylène.

## Patentansprüche

1. Baueinheit bestehend aus einem Träger (100) für ein elektrisches Gerät, der in Form eines einen mit einem Überzug (112) aus einem synthetischen isolierenden Material versehenen flachen Grundkörper (111) aus einem metallenen Material aufweisenden Rahmens (110) vorliegt, und Rastmitteln (120) einer Zierabdeckplatte,
**dadurch gekennzeichnet, daß** die Rastmittel vom Rahmen (110) getrennte und in Durchgangsöffnungen (113) des letzteren eingebrachte Zapfen (120) aus einem synthetischen isolierenden Material aufweisen, daß jeder Zapfen (120) einen Körper in Form einer Hülse aufweist, die einerseits an einem von deren beiden Enden wenigstens einen Zahn (122) zum Festhaken an der Vorderseite (110A) des Rahmens (110) und an deren anderem Ende wenigstens eine Rippe (124) zum Andrücken an die Rückseite (110B) des Rahmens (110) aufweist, und daß jeder Zahn (122) jedes in eine der Durchgangsöffnungen (113) des Rahmens (110) eingreifenden Zapfens (120) auf der Vorderseite (110A) des Rahmens (110) eine Erhebung bildet, die dazu geeignet ist, mit komplementären Verbindungsmitteln der Zierabdeckplatte zusammenzuwirken, um an der Befestigung der letzteren am Rahmen (110) mitzuwirken.

2. Baueinheit gemäß Anspruch 1, **dadurch gekennzeichnet, daß** jeder Zapfen (120) am entsprechenden Ende seines Körpers eine Mehrzahl von Zähnen (122) zum Festhaken an der Vorderseite (110A) des Rahmens (110) aufweist.

3. Baueinheit gemäß Anspruch 2, **dadurch gekennzeichnet, daß** jeder Zapfen (120) in Längsrichtung durch eine Mehrzahl von Spalten (125) gespalten ist, die die Zähne (122) voneinander trennen.

4. Baueinheit gemäß einem der vorangehenden Ansprüche, **dadurch gekennzeichnet**, das jeder Zapfen (120) einstückig durch Gießen eines Plastikmaterials hergestellt ist.

5. Baueinheit gemäß einem der vorangehenden Ansprüche, **dadurch gekennzeichnet, daß** der Überzug (112) eine auf den metallenen Grundkörper (111) aufgeformte Haut aus isolierendem Material ist.

6. Baueinheit gemäß dem vorangehenden Anspruch, **dadurch gekennzeichnet, daß** die Zapfen (120) nach dem Aufformen der Haut (112) auf den metallenen Grundkörper (111) in den Rahmen (110) eingebracht werden.

7. Baueinheit gemäß Anspruch 5, **dadurch gekennzeichnet, daß** die Zapfen (120) vor dem Aufformen der Haut (112) aus isolierendem Material in den metallenen Grundkörper (111) des Rahmens (110) eingebracht werden.

8. Baueinheit gemäß einem der Ansprüche 5 bis 7, **dadurch gekennzeichnet, daß** die Haut (112) aus isolierendem Material den größten Teil der Vorder- und der Rückseite des metallenen Grundkörpers (111) bedeckt.

9. Baueinheit gemäß einem der Ansprüche 5 bis 8, **dadurch gekennzeichnet, daß** die Haut (112) aus isolierendem Material die äußeren und die inneren Kanten des Grundkörpers (111) des Rahmens (110) bedeckt.

10. Baueinheit gemäß einem der Ansprüche 5 bis 9, **dadurch gekennzeichnet, daß** das die Haut (112) bildende isolierende Material ein Plastikmaterial wie etwa ein mit Glasfasern versetztes Polymer oder ein ABS (Acrylnitril-Butadien-Styrol) ist.

11. Baueinheit gemäß einem der Ansprüche 5 bis 9, **dadurch gekennzeichnet, daß** das die Haut (112) bildende isolierende Material Polypropylen ist.

## Claims

1. An assembly consisting of an electrical equipment support (100) in the form of a frame (110) comprising a flat metal core (111) covered in a covering (112) of insulating synthetic material, and of clip-fastener means (120) for fastening a facade trim plate thereto, the assembly being **characterized in that** said clip-fastener means comprise studs (120) of insulating synthetic material that are separate from the frame (110) and that are fitted in through openings (113) therein, **in that** each stud (120) comprises a sleeve-shaped body carrying, firstly at one of its ends at least one catch tooth (122) for catching against the front face (110A) of the frame (110), and secondly at its other end, at least one fin (124) for bearing against the rear face (110B) of the frame (110), and **in that** each tooth (122) of each stud (120) engaged in the through opening (113) of the frame (110) projects from the front face (110A) of the frame (110) in such a manner as to co-operate with complementary engagement means of the facade trim plate so as to participate in fastening said plate on the frame (110).

2. The assembly according to claim 1, **characterized in that** each stud (120) comprises at the corresponding end of its body, a plurality of catch teeth (122) for catching against the front face (110A) of the frame (110).

3. The assembly according to claim 2, **characterized in that** each stud (120) is slotted longitudinally by a plurality of slots (125) that separate said teeth (122) from one another.

4. The assembly according to any preceding claim, **characterized in that** each stud (120) is made as a single piece by molding a plastics material.

5. The assembly according to any preceding claim, **characterized in that** the covering (112) is a skin of synthetic material overmolded on the metal core (111).

6. The assembly according to the preceding claim, **characterized in that** the studs (120) are fitted to the frame (110) after the skin (112) has been overmolded onto the metal core (111).

7. The assembly according to claim 5, **characterized in that** the studs (120) are fitted to the metal core (111) of the frame (110) before the insulating material skin (112) is overmolded.

8. The assembly according to any one of claims 5 to 7, **characterized in that** the skin (112) of insulating material covers the major portion of the front and rear faces of the metal core (111).

9. The assembly according to any one of claims 5 to 8, **characterized in that** the skin (112) of insulating material covers the outer and inner edge faces of the metal core (111) of the frame (110).

10. The assembly according to any one of claims 5 to 9, **characterized in that** the insulating material constituting the skin (112) is a plastics material such as a fiberglass-filled polymer or acrylonitrile butadiene styrene (ABS).

11. The assembly according to any one of claims 5 to 9, **characterized in that** the insulating material constituting the skin (112) is polypropylene.
